# EUROPEAN PATENT SPECIFICATION

(11) **EP 3 886 030 B1**
(45) Date of publication and mention of the grant of the patent: **26.02.2025**
(21) Application number: 21165547.7
(22) Date of filing: 29.03.2021
(51) Int. Cl.: G06Q 30/02, G06Q 30/06

(54) **SYSTEM AND METHOD OF PURCHASE VERIFICATION FOR CROWDSOURCING BASED REFERRAL**
SYSTEM UND VERFAHREN ZUR KAUFVERIFIZIERUNG FÜR CROWDSOURCING-BASIERTE EMPFEHLUNG
SYSTÈME ET PROCÉDÉ DE VÉRIFICATION D'ACHATS POUR UNE RECOMMANDATION FONDÉE SUR L'EXTERNALISATION

(30) Priority: 28.03.2020 SE 2030106; 27.05.2020 US 202016884075
(43) Date of publication of application: 29.09.2021
(73) Proprietor: KeKeQiHuo (Shenzhen) Technologies Co., Ltd., Shenzhen, Guangdong 518000 (CN)
(72) Inventor: ZU, Keke, 16955 Solna (SE)
(74) Representative: Proi World Intellectual Property GmbH

(56) References cited:
- US-B1- 8 688 524
- US-B2- 8 732 011

## Description

### 1 Field of Invention/Keywords

Crowdsourcing referral, verification of crowdsourcing purchase, verified referral charging.

### 2 Background of Invention

A useful mechanism for identifying the origin of user traffic is part of HTTP. The protocol includes a field called "referrer", which usually contains the previous website or piece of content visited by the user agent (browser). This makes it possible for websites to know from which parts of the web its traffic is coming from, giving websites complete and instantaneous knowledge about the effectiveness of their advertisement campaigns.

The existence of the "referrer" field enabled the development of interesting business models, such as pay-per-click, popularized by Google Adwords. In this model, the business customer only pays for the advertisement that generated clicks, in complete opposition to former advertisement models used, for example, in broadcast media.

Crowdsourcing is a specific sourcing model in which individuals or organizations use contributions from internet users to obtain needed services or goods. One of the crowdsourcing examples is the Amazon Mechanical Turk (MTurk). The MTurk is a platform that enables the requesters (individuals and/or businesses) to publish tasks and jobs. In the other side, the crowdsourcing workers can select tasks, work on it, and get paid by delivering tasks to the requesters.

In this invention, the advertisement or purchasing referral information is provided in a crowdsourcing way, i.e. from the individuals and/or businesses. The purchase can also be implemented in a crowdsourcing way, i.e. a user can request other users to purchase for him or her. This invention focuses on the purchasing verification for crowdsourcing based referral systems and/or platforms, which in terms of online websites, mobile APPs, etc.

The purchasing referral information introduced in this invention is comprised by the information of referred products and/or services with at least one buying address. The various users introduced in this invention are listed below. The referred user is a crowdsourcing user who supplied a purchasing referral information to the said system and/or platform. The requesting user is a user who requests other users to implement a task (e.g. to purchase, to visit) for him or her. The implementing user is a user who reacts and implements a requested task from the said system and/or platform. It worth noting that the various users defined in this invention is from the logical functionality point of view. In practice, one natural person or business can perform of all the above defined logical functionalities or user roles in the said system and/or platform.

US 87320011 B2 relates to a system for implementing a performance-based customer referral program; US 8688524 B1 relates to a tracking online impressions to offline purchases; US 6405175 B2 relates to a shopping scouts web site for rewarding customer referrals on product and price information with rewards scaled by the number of shoppers using the information; and US 2011/196725 A1 relates to a system and method for awarding customers for referrals.

### 3 Problem Description

For internet-based vendors, the pay-per-click solutions like Google Adwords can be an efficient and effective way to verify whether users visited the corresponding websites. However, for the so-called brick-and-mortar offline stores, the pay-per-click solutions cannot verify whether users physically visited the corresponding offline stores.

Furthermore, the pay-per-click solutions cannot verify users who searched the referral information (e.g. online advisement) really made a purchase at the corresponding online and/or offline stores.

Without the verified physical visit and/or purchase information, the pay-per-click provider like Google cannot justify their charging to the vendors especially for the offline store owners. For business like, restaurant, barbershop, cinema, coffee shop, amusement park, etc., they usually need customers to be physically there for getting the products and/or services. It is hard to be precise and fair to charge these kinds of business in the pay-per-click way.

Except for justifying the referral charging, the proposed purchasing verification is necessary when the purchase was implemented in a crowdsourcing way. For example, a requesting user can ask an implementing user to buy the referred products for him or her. The system and/or platform needs to justify the charging for the requesting user that the requested product or service is really purchased from the referred stores. In sum, there is a need for a system and/or platform to verify that a purchase is really generated from the referral information and/or the referred store (physically or online).

### 4 Prior Art

Most of the references regarding the referral service are focused on the rewarding to the person who referred.

US 6405175 proposes methods on how to reward the submitting users for submitting product and price information. US20110196725A1 discloses a method for implementing an electronic customer referral service that both checks the new customer is distinct from the referring customer and tracks the referral so that the old customer gets credit for their referred new customer's action.

The proposed purchasing verification in this invention, however, is implemented by verifying whether a user made a purchase suggested by the purchasing referral information.

In sum, none of the listed prior arts have been proposed the similar solution like this invention.

### 5 Brief Summary

The core inventive points of this patent are the verification of a purchasing activity implemented by one or multiple users of a crowdsourcing based system and/or platform. There are two main aspects, the verification of purchasing certification from two sources and the verification of the implemented one or multiple purchasing actions. The system and/or platform respectively obtains the purchase proof from the implementing user and the purchase certification from the corresponding business owner. A comparison process is implemented to verify whether these two sources of purchase certification can be matched with each other. Furthermore, an address obtaining process is triggered by pre-defined user responses and/or actions when interact with the said system and/or platform to generate the obtained address associated with timestamp. And one or multiple extracted purchase addresses is obtained by respectively extract purchase address and/or time from the purchase proof supplied by the implementing user and the purchase certification supplied by the business owner. The verification of the implemented purchasing action is implemented by comparing the one or multiple obtained purchasing address with the one or multiple extracted purchase address. Based on the verified purchase results, a charging fee to a business owner (e.g. the online and/or offline store owners) and/or a requesting user, a reward to the referred user, and a service fee to the implementing user are calculated and determined.

### 6 Advantage of the Proposed Solution

A system and method of purchasing verification is proposed for crowdsourcing based referral systems and/or platform in this invention. The system and/or platform calculates the charging fee, reward and service fee based on the verified purchase results. Because the purchase from a referral information is verified, the charging to the referred business owners can be justified.

In the other hand, business models of crowdsourcing purchase can be enabled by the proposed purchase verification. That's, a requesting user can ask some other users to implement the purchase of referred products and/or services for him or her; An implementing user can buy and pay the referred products and/or services in advance for the requesting user and be paid back after the purchase verification is verified by the system and/or platform.

### 7 The Brief Description of the Drawings

Embodiments of the present disclosure will now be described, by way of example only, with reference to the accompanying drawings, in which like reference numerals are used for like parts, and in which:
Figure 1 shows an example illustrating the structure of the referral information.
Figure 2 shows a flow chart illustrating the core steps of this invention.
Figure 3 shows a signaling of implementing the purchase verification.
Figure 4 shows a signaling of implementing the purchase verification for a single user.

### 8 Detailed Description of the Invention

Detailed embodiments of the claimed structures and methods are disclosed herein, however, it can be understood that the disclosed embodiments are merely illustrative of the claimed structures and methods that may be embodied in various forms. This invention may, however, be embodied in many different forms and should not be construed as limited to the exemplary embodiments set forth herein. Rather, these exemplary embodiments are provided so that this disclosure will be thorough and complete and will fully convey the scope of this invention to those skilled in the art. In the description, details of well-known features and techniques may be omitted to avoid unnecessarily obscuring the presented embodiments.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The following described exemplary embodiments provide a system, method and program product for crowdsourcing based purchasing verification.

The purchasing referral information used in this invention is the introduction and description of referred products and/or services. The content of purchasing referral information can be expressed in but not limited to: text, picture, video, audio, symbol, virtual reality, sensory information (such as touch, taste, and smell), etc.

The purchasing referral information displayed in the system and/or platform should contain four types of information: attribute information, address information, recommendation information, and label information.

The attribute information is the information and parameters about the product and/or service itself. Generally, the attribute information includes but not limited to: product name, price, brand, photo, product specifications (such as color, weight, size, etc.), origin, function, usage, etc. The address information is from where the referred products and/or services can be obtained. The address information can be but not limited to: physical address (such as GPS, civic address, post address, indoor address, etc.), virtual address (such as network address, IP address, etc.), carriers which contain address information (such as images, videos, QR codes, etc.). The recommendation information is the direct or indirect experience, opinion, feeling, etc. regarding to the referred product and/or service. The recommendation information can be but not limited to: advertisement, selling points, story (e.g. brand story, symbolic meaning, business history, etc.), experience, product evaluation, etc. The label information is the descriptor that assigned to specific product and/or service. The label information can be but not limited to: category label, product feature label, user-defined label, etc.

The required purchasing referral information is provided by crowdsourcing users, i.e. individuals and/or businesses. For example, individual users can share and recommend products with buying address on the system and/or platform; store owners (online or offline) can introduce and advertise their products and/or services on the system and/or platform. Alternatively, the purchasing referral information can also be provided by the system and/or platform. For example, the purchasing referral information can be made by the dedicated operating team of the system and/or platform; or the purchasing referral information can be collected and/or generated by algorithms and/or mechanisms such as artificial intelligence; or the purchasing referral information can be obtained from a mix of both ways listed above.

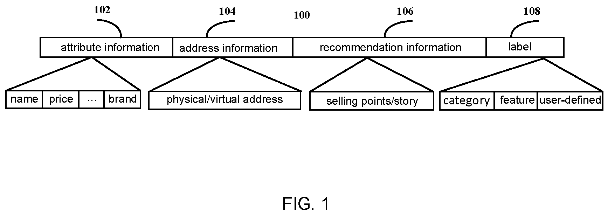

As one embodiment, the system and/or platform requires the purchasing referral information from crowdsourcing users at least contain the necessary attribute information (such as, product name, price, product specifications, etc.) with at least one buying address. One example of the structure of the purchasing referral information used in the system and/or platform is illustrated in Figure 1.

### 8.1 The Core Steps

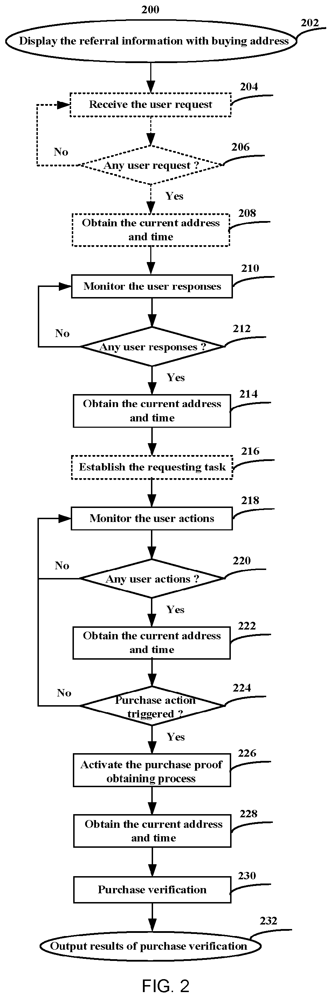

The core steps of this invention are illustrated in the flowchart in Figure 2.

Step 1, the said system and/or platform display the purchasing referral information and receive the user request 204. After acquiring the purchasing referral information 100, one user can request other users to implement actions such as: to visit, to purchase, etc. for him or her. We term a user who requests others to implement tasks for him or her as the requesting user, a user who reacts and implements the requested tasks as the implementing user.

Associated with the purchasing referral information 100, the said system and/or platform can set buttons corresponding to various user requests for selection such as: visit for me, purchase for me, etc. A requesting user can also actively feedback or provide requests to the said system and/or platform. For example, a requesting user can actively send requesting orders, such as, requesting a visit for me, requesting a purchase for me, etc. to the said system and/or platform. When a specific user request is received by the system and/or platform, an address obtaining process 208 is triggered to obtain the current address (physical and/or virtual address, e.g. the GPS, IP, etc.) associated with timestamp of the requesting user.

Most smart phones on the market equipped with a GPS unit, which paves the way for obtaining the real-time location information, i.e. in terms of GPS coordinates. The timestamp contains the data and time of the day to indicate when a system event occurred. The timestamp can be obtained from the user equipment, for example by accessing the network time, by reading the time clock of the operating system.

The system event that can trigger the address obtaining process is predefined by system designer. The predefined system event can be but not limited to: a request was received, a request was accepted, a user action was received, a purchase proof from an implementing user was received, a purchase certification from a business owner was received.

Step 2, the said system and/or platform display the user requests and monitor responses from the other users 210. The other users can select to take the required tasks, such as: to visit a referred store for a requesting user, to purchase a referred product for a requesting user. When a requesting task is accepted by an implementing user, an address obtaining process 214 is activated by the system and/or platform to obtain the current address (physical and/or virtual address) associated with timestamp of the implementing user.

Alternatively, the requesting user can directly request the user who provided the referral information at the system and/or platform to implement a task, for example to purchase the referred product or service for him or her.

Step 3, the said system and/or platform establish the requesting task between the requesting and the implementing users 216. When a task was accepted by an implementing user, the system and/or platform feedback this status to the requesting user. Together with the feedback, the system and/or platform can also inform the total amount needed for implementing such a requesting task. The payment can be consisted by but not limited to: the cost of referred products and/or services, the labor cost of the implementing user, the traffic cost. Then, the requesting user needs to transfer the total amount, if there is any, to the system and/or platform. After the total amount for implementing the requested task is received, the system and/or platform feedback the task confirmation status and inform the implementing user to implement the requested tasks, e.g. to purchase products or services, for the requesting user.

Step 4, the said system and/or platform monitor the follow-up user actions 218. The user actions are the follow-up activities from the implementing user. The user actions can be but not limited to: visiting store, purchasing at store, uploading documents, taking photos or videos to the said system and/or platform. The system and/or platform can set buttons corresponding to various user actions for selection or to trigger. For example, when an implementing user is physically at the referred store and purchasing the referred products, he/she can select and trigger the 'purchasing' button provided by the said system and/or platform. When a user action was triggered and/or received, the address obtaining process 222 is activated by the system and/or platform to obtain the current address (physical and/or virtual) associated with timestamp of the implementing user.

Alternatively, the implementing user and/or the business owner can also actively feedback or provide the implemented user actions to the system and/or platform. For example, instead of providing various user actions for selection via the system and/or platform, the implementing user and/or the business owner can send a signal, for example in forms of a message, which contains current address associated with timestamp when a user action, such as 'purchasing', is implementing at a referred store.

If a purchasing action was triggered and/or received 224, a purchase proof obtaining process 226 is activated and executed by the system and/or platform. The purchase proof can be but not limited to: payment record, receipt, invoice, transaction record, the bought product, bill. The ways used by the said system and/or platform to obtain the purchase proof can be, but not limited to: by taking photos, taking videos, uploading documents (such as pictures, photos, videos, PDFs, etc.), providing information (such as invoice number, product ID, etc.). When a user is submitting the purchase proof to the system and/or platform, the address obtaining process 228 is activated to obtain the current address (physical and/or virtual) associated with timestamp of the user.

Step 5, the said system and/or platform implement the purchasing verification 230. When a purchasing action was implemented, the corresponding business owner needs to provide the corresponding purchase certificate such as a receipt to the system and/or platform. The system and/or platform verify whether the corresponding purchase proof from the implementing user and the purchase certification from the business owner can be matched with each other. The matching measurement can be implemented by a dedicated operating team, by crowdsourcing users, by algorithms and/or mechanisms such as artificial intelligence, or by a combination of the three. The items to be compared and measured are including but not limited to: the product name, the purchase amount, the invoice number, the purchase date and time, features of image, pixels.

Alternatively, the system and/or platform can also send the purchase proof from the implementing user to the corresponding business owner. And the business owner needs to verify the validity of user purchase and feedback the validity result to the system and/or platform. The first comparison result is thus formed by the comparison of the two sources purchase certification respectively from the implementing user and the corresponding business owner.

The system and/or platform can further verify the implemented purchase action by providing extra reference information to the purchase verification. The purchased address and time are usually contained in the purchase proof supplied by an implementing user, and/or the purchase certification supplied by the corresponding business owner. Thus, one or multiple extracted purchasing address with time can be obtained by extracting purchasing address and time from the purchase proof supplied by the implementing user and/or the purchase certification supplied by the business owner, respectively. In the other side, the requested buying address can be known from the purchasing referral information. Therefore, the second comparison result is formed by comparing the one or multiple extracted purchase address with the purchase address comprised in the purchasing referral information.

From the above Step 2 and Step 4, one or multiple sets of purchasing address associated with timestamp were obtained by the system and/or platform when a requested task was implemented by an implementing user. These addresses are termed as the obtained address.

The third comparison result is formed by comparing one or multiple obtained address of the implementing user with the purchase address comprised in the purchasing referral information and/or comparing one or multiple obtained address of the implementing user with one or multiple extracted purchase address.

Additionally, not only the purchasing address but also the purchasing time can be compared for the obtained address and the extracted address.

Thus, the validity of purchasing action can be further verified with the second and/or third comparison results. The verified purchasing action can be used as an extra reference information to add authentication for the implemented purchase. For example, the verified purchase address associated with timestamp can effectively prevent a store owner deny a user purchase; in the other side, it can effectively prevent a user providing fake purchase proof.

Step 6, the said system and/or platform calculate the charging fee to the business owner, reward to the user who referred, and a service fee to the implementing user based on the above obtained verification and/or comparison results. The system and/or platform count the transaction data from the verified purchase. The counted transaction data can be but not limited to, the number of verified purchases made from a purchasing referral information, the total amount of verified purchase from a purchasing referral information, ratio between visit and purchase for a referred store. Based on the transaction data of verified purchase, the said system and/or platform decide how to charge a business owner (such as online and/or offline store owners) who benefits from the purchasing referral information and how to reward a submitting user who provided the purchasing referral information. For the implementing user, the system and/or platform pay back his or her pre-paid cost for implementing the requested purchase after the implemented purchase passed the verification. Except that, the system and/or platform also calculate the amount that should reward the implementing user for the provided service to the requesting user.

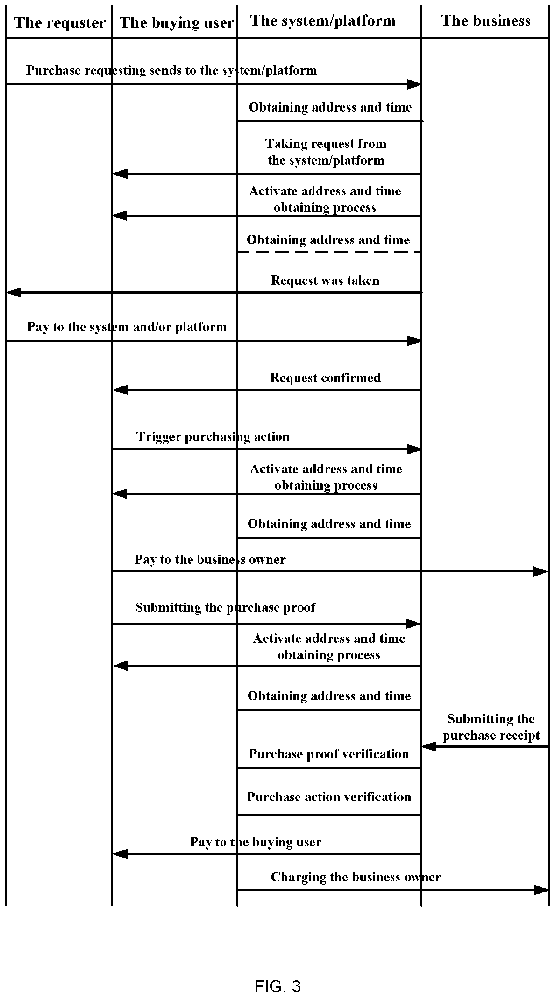

The signaling of purchase verification implemented by the system and/or platform is illustrated in Figure 3.

### 8.2 The Alternative Ways

Alternatively, the requesting and implementing user can be the same person, which is termed as the single user case in this invention. It is worth noting that the single user case shares the same framework of purchase verification with the requesting user case which is illustrated in Figure 2. And the core steps of purchase verification for the single user case can be obtained by removing the blocks with dotted line in Figure 2.

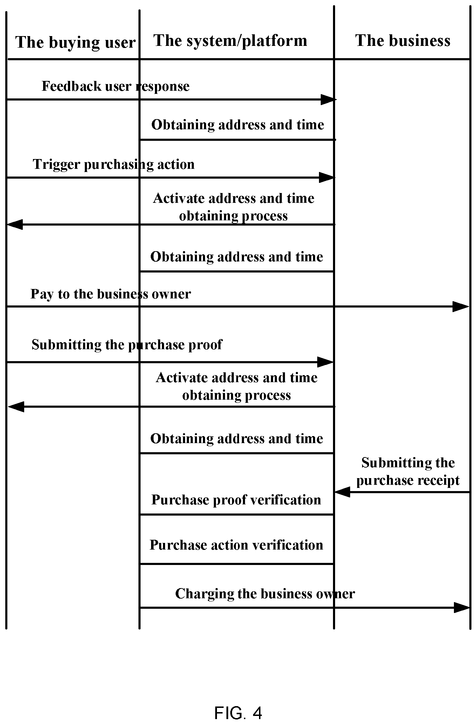

Correspondingly, the user responses for the single user case monitored by the system and/or platform in 210 need to be changed as but limited to: to visit, to purchase, instead of to visit for a requesting user, to purchase for a requesting user. The signaling of purchase verification for the single user case is illustrated in Figure 4.

### 9 Additional Considerations

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss generality. The described operations and their associated modules may be embodied in software, firmware, hardware, or any combinations thereof. In one embodiment, a software module is implemented with a computer program product comprising a persistent computer-readable medium containing computer program code, which can be executed by a computer processor for performing any or all of the steps, operations, or processes described.

Embodiments of the invention may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a persistent computer readable storage medium or any type of media suitable for storing electronics instructions, and coupled to a computer system bus. Furthermore, any computing systems, referred to in the specification may include a single processor or may be architectures employing multiple processor designs for increased computing capability.

## Claims

1. A computer program product comprising a computer readable storage medium having computer readable program instructions thereon for causing a processor to carry out steps to verify a purchasing activity implemented by one or more users of a crowdsourcing based purchasing referral system and/or platform, comprising the steps of:
obtaining purchasing referral information (100), which contains information about recommended product and/or service, from crowdsourcing users;
displaying the purchasing referral information with a purchase address (202), which can be a physical or a virtual address;
receiving a task request from a requesting user (204), wherein the user who requests other users to implement a task for him or her is the requesting user;
monitoring one or more responses and one or more actions from the requesting user (206) and an implementing user (210), wherein the user who reacts and implements the requested task is the implementing user;
obtaining address associated with timestamp information of the implementing user when one or more pre-defined system events and/or user actions are triggered or received (214), (222), (228), to generate the one or multiple obtained address, wherein the address associated with timestamp information of the implementing user is a current physical address of the user;
obtaining a purchase proof and a purchase certificate respectively from the implementing user and a business owner (226), wherein the purchased product and/or service is provided by the business owner;
comparing the obtained purchase proof from the implementing user with the purchase certificate from the business owner to produce a first comparison result (232);
extracting the purchase address from the purchase proof supplied by the implementing user and/or the purchase certification supplied by the business owner, to obtain the one or multiple extracted purchase address;
comparing the one or multiple extracted purchase address with the purchase address comprised in the purchasing referral information (230) to produce a second comparison result (232);
comparing said one or multiple obtained address of the implementing user with the purchase address comprised in the purchasing referral information and/or comparing one or multiple obtained address of the implementing user with one or multiple extracted purchase address to produce a third comparison result (232);
verifying the validity of the purchasing activity based on the first comparison result, and verifying the validity of the purchase action by an implementing user based on the second and/or the third comparison results (232);
determining, based on the verification and/or the comparison results, a fee to be charged on the business owner, a reward to the user who provided the purchasing referral information, and a service fee to be paid to the implementing user.

2. The computer program product of claim 1, wherein the purchasing referral information (100) used by the system and/or platform is provided by crowd sourcing users, i.e. individuals and/or businesses, and it should contain four types of information: attribute information (102), address information (104), recommendation information (106), and label information (108).

3. The computer program product of claim 1 or claim 2, wherein the purchasing referral information (100) used by the system and/or platform need to be at least contain the attribute information (102) (such as, product name, price, product specifications, origin, function, usage) with buying address (104) (such as a GPS address, civic address, post address, indoor address, network address, IP address).

4. The computer program product of claim 1, wherein the system and/or platform provide interface to obtain the purchase proof (226), e.g. a payment record, a receipt, an invoice, a bill, from the implementing user and/or the purchase certification e.g. a receipt from the business owner in terms of, but not limited to: by taking photos, taking videos, uploading documents, providing information.

5. The computer program product of claim 1, wherein the verification of purchasing activity is implemented to produce a first comparison result by comparing and/or measuring the matching degree of the purchase proof supplied by the implementing user and the purchase certification supplied by the business owner.

6. The computer program product of any one of the previous claims, wherein items to be compared and measured for the purchasing verification include but are not limited to any of the following: the product name, the purchase amount, the invoice number, the purchase date and time, features of image, pixels.

7. The computer program product of claim 1, wherein the purchasing verification and/or the matching measurement are implemented by the dedicated operating team of the said system and/or platform, by crowd sourcing users, by algorithms and/or mechanisms such as artificial intelligence, or by a combination of the three.

8. The computer program product of claim 1, wherein an interface is provided by the system and/or platform to monitor and/or receive one or more responses and one or more actions from a requesting user and/or an implementing user (206), (212), (220).

9. The computer program product of claim 8, wherein the user responses and actions comprise submitting a user request (e.g. requesting a visit, requesting a purchase), feedback a user response (e.g. to visit a referred store for a requesting user, to purchase a referred product for a requesting user), implementing a user action (e.g. visiting, purchasing, submitting a purchase proof) from a requesting user and/or an implementing user.

10. The computer program product of claim 1, claim 8, or claim 9, wherein an address (physical and/or virtual address, e.g. the GPS address, IP address) associated with timestamp obtaining process (208), (214), (222), (228), is triggered by user responses and/or actions when interactive with the system and/or platform to generate the one or multiple obtained address.

11. The computer program product of claim 1 or claim 4, wherein the purchase address is extracted from the purchase proof supplied by the implementing user and/or the purchase certification supplied by the business owner, to obtain the one or multiple extracted purchase address.

12. The computer program product of claim 1, wherein the verification of purchasing activity is further implemented to produce a second comparison result by the comparison of one or multiple extracted purchase address with the purchase address comprised in the referral information.

13. The computer program product of claim 1, wherein the verification of purchasing activity is further implemented to produce a third comparison result by the comparison of one or multiple obtained address of the implementing user with the purchase address comprised in the referral information, and/or the comparison of one or multiple obtained address of the implementing user with one or multiple extracted address, and/or the comparison among obtained addresses when multiple obtained address is available.

14. The computer program product of claim 1, claim 12, or claim 13, wherein not only the address but also the timestamp can be used for comparison.

15. The computer program product of claim 1, wherein the validity of the purchasing activity and/or the verification of the purchase action by an implementing user is implemented based on the first, the second, and/or the third comparison results.

16. The computer program product of claim 1, wherein a charging fee on the business owner, a reward to user who referred, and a service fee to be paid to the implementing user are calculated and determined by the system and/or platform based on the results of verified purchasing activity and/or purchase action, such as the number of verified purchase made from a referral information, total amount of verified purchase from a referral information, ratio between visit and purchase for a referred store.

## Patentansprüche

1. Computerprogrammprodukt, das ein computerlesbares Speichermedium mit computerlesbaren Programmanweisungen darauf umfasst, um einen Prozessor zu veranlassen, Schritte zur Verifizierung einer Kaufaktivität auszuführen, die von einem oder mehreren Nutzern eines auf Crowdsourcing basierenden Kaufempfehlungssystems und/oder einer Plattform durchgeführt wird, umfassend die Schritte:
Erhalt von Kaufempfehlungsinformationen (100), die Informationen über empfohlene Produkte und/oder Dienstleistungen enthalten, von Crowdsourcing-Nutzern;
Anzeige der Kaufempfehlungsinformationen mit einer Kaufadresse (202), die eine physische oder eine virtuelle Adresse sein kann;
Empfangen einer Aufgabenanforderung von einem anfordernden Benutzer (204), wobei der Benutzer, der andere Benutzer auffordert, eine Aufgabe für ihn auszuführen, der anfordernde Benutzer ist;
Überwachung einer oder mehrerer Antworten und einer oder mehrerer Aktionen des anfordernden Benutzers (206) und eines ausführenden Benutzers (210), wobei der Benutzer, der reagiert und die angeforderte Aufgabe ausführt, der ausführende Benutzer ist;
Erhalten einer mit Zeitstempelinformationen des ausführenden Benutzers verbundenen Adresse, wenn ein oder mehrere vordefinierte Systemereignisse und/oder Benutzeraktionen ausgelöst oder empfangen werden (214), (222), (228), um die eine oder mehrere erhaltene Adressen zu erzeugen, wobei die mit Zeitstempelinformationen des ausführenden Benutzers verbundene Adresse eine aktuelle physische Adresse des Benutzers ist;
Erhalten eines Kaufnachweises bzw. eines Kaufzertifikats von dem ausführenden Benutzer und einem Geschäftsinhaber (226), wobei das gekaufte Produkt und/oder die gekaufte Dienstleistung von dem Geschäftsinhaber bereitgestellt wird;
Vergleich des erhaltenen Kaufnachweises des ausführenden Benutzers mit dem Kaufzertifikat des Geschäftsinhabers, um ein erstes Vergleichsergebnis (232) zu erzeugen;
Extrahieren der Kaufadresse aus dem vom ausführenden Benutzer gelieferten Kaufnachweis und/oder der vom Geschäftsinhaber gelieferten Kaufbescheinigung, um die eine oder mehrere extrahierte Kaufadressen zu erhalten;
Vergleichen der einen oder mehreren extrahierten Kaufadresse(n) mit der Kaufadresse, die in den Kaufbezugsinformationen (230) enthalten ist, um ein zweites Vergleichsergebnis (232) zu erzeugen;
Vergleichen der einen oder mehreren erhaltenen Adresse(n) des ausführenden Benutzers mit der Kaufadresse, die in den Kaufempfehlungsinformationen enthalten ist, und/oder Vergleichen einer oder mehrerer erhaltener Adresse(n) des ausführenden Benutzers mit einer oder mehreren extrahierten Kaufadresse(n), um ein drittes Vergleichsergebnis (232) zu erzeugen;
Überprüfen der Gültigkeit der Kaufhandlung auf der Grundlage des ersten Vergleichsergebnisses und Überprüfen der Gültigkeit der Kaufhandlung durch einen ausführenden Benutzer auf der Grundlage des zweiten und/oder des dritten Vergleichsergebnisses (232);
Bestimmung, basierend auf der Überprüfung und/oder den Vergleichsergebnissen, einer Gebühr, die dem Geschäftsinhaber in Rechnung gestellt werden soll, einer Belohnung für den Benutzer, der die Kaufempfehlungsinformationen bereitgestellt hat, und einer Dienstleistungsgebühr, die an den ausführenden Benutzer zu zahlen ist.

2. Computerprogrammprodukt nach Anspruch 1, wobei die von dem System und/oder der Plattform verwendeten Kaufempfehlungsinformationen (100) von Crowd-Sourcing-Nutzern, d. h. Einzelpersonen und/oder Unternehmen, bereitgestellt werden und vier Arten von Informationen enthalten sollten: Attributinformationen (102), Adressinformationen (104), Empfehlungsinformationen (106) und Etiketteninformationen (108).

3. Das Computerprogrammprodukt nach Anspruch 1 oder Anspruch 2, wobei die von dem System und/oder der Plattform verwendeten Kaufempfehlungsinformationen (100) zumindest die Attributinformationen (102) (wie Produktname, Preis, Produktspezifikationen, Herkunft, Funktion, Verwendung) mit der Kaufadresse (104) (wie eine GPS-Adresse, Bürgeradresse, Postadresse, Innenadresse, Netzwerkadresse, IP-Adresse) enthalten müssen.

4. Computerprogrammprodukt nach Anspruch 1, wobei das System und/oder die Plattform eine Schnittstelle bereitstellen, um den Kaufnachweis (226), z. B. einen Zahlungsbeleg, eine Quittung, eine Rechnung, eine Rechnung, von dem ausführenden Benutzer und/oder den Kaufbeleg, z. B. eine Quittung, von dem Geschäftsinhaber zu erhalten, z. B. durch das Aufnehmen von Fotos, das Aufnehmen von Videos, das Hochladen von Dokumenten, die Bereitstellung von Informationen.

5. Computerprogrammprodukt nach Anspruch 1, wobei die Überprüfung der Kaufaktivität implementiert wird, um ein erstes Vergleichsergebnis zu erzeugen, indem der Übereinstimmungsgrad des vom ausführenden Benutzer gelieferten Kaufnachweises und des vom Geschäftsinhaber gelieferten Kaufnachweises verglichen und/oder gemessen wird.

6. Das Computerprogrammprodukt nach einem der vorhergehenden Ansprüche, wobei die zu vergleichenden und zu messenden Elemente für die Kaufüberprüfung einen der folgenden Punkte umfassen, aber nicht darauf beschränkt sind: den Produktnamen, den Kaufbetrag, die Rechnungsnummer, das Kaufdatum und die Kaufzeit, Bildmerkmale, Pixel.

7. Computerprogrammprodukt nach Anspruch 1, wobei die Kaufüberprüfung und/oder die Abgleichsmessung durch das spezielle Betriebsteam des Systems und/oder der Plattform, durch Crowd-Sourcing-Nutzer, durch Algorithmen und/oder Mechanismen wie künstliche Intelligenz oder durch eine Kombination der drei implementiert werden.

8. Computerprogrammprodukt nach Anspruch 1, wobei eine Schnittstelle von dem System und/oder der Plattform bereitgestellt wird, um eine oder mehrere Antworten und eine oder mehrere Aktionen von einem anfordernden Benutzer und/oder einem ausführenden Benutzer (206), (212), (220) zu überwachen und/oder zu empfangen.

9. Computerprogrammprodukt nach Anspruch 8, wobei die Benutzerantworten und - aktionen das Übermitteln einer Benutzeranforderung (z. B. Anforderung eines Besuchs, Anforderung eines Kaufs), die Rückmeldung einer Benutzerantwort (z. B. Besuch eines empfohlenen Geschäfts für einen anfordernden Benutzer, Kauf eines empfohlenen Produkts für einen anfordernden Benutzer), die Durchführung einer Benutzeraktion (z. B. Besuch, Kauf, Übermittlung eines Kaufnachweises) von einem anfordernden Benutzer und/oder einem ausführenden Benutzer umfassen.

10. Computerprogrammprodukt nach Anspruch 1, Anspruch 8 oder Anspruch 9, wobei eine Adresse (physische und/oder virtuelle Adresse, z. B. die GPS-Adresse, IP-Adresse), die mit dem Zeitstempel-Ermittlungsprozess (208), (214), (222), (228) verbunden ist, ausgelöst wird durch Benutzerreaktionen und/oder -aktionen, wenn sie mit dem System und/oder der Plattform interagieren, um die eine oder mehrere erhaltene Adressen zu erzeugen.

11. Das Computerprogrammprodukt nach Anspruch 1 oder Anspruch 4, wobei die Kaufadresse aus dem vom ausführenden Benutzer gelieferten Kaufnachweis und/oder der vom Geschäftsinhaber gelieferten Kaufbescheinigung extrahiert wird, um die eine oder mehrere extrahierte Kaufadressen zu erhalten.

12. Das Computerprogrammprodukt nach Anspruch 1, wobei die Überprüfung der Kaufaktivität ferner implementiert ist, um ein zweites Vergleichsergebnis durch den Vergleich einer oder mehrerer extrahierter Kaufadressen mit der in den Verweisinformationen enthaltenen Kaufadresse zu erzeugen.

13. Computerprogrammprodukt nach Anspruch 1, wobei die Überprüfung der Kaufaktivität ferner implementiert ist, um ein drittes Vergleichsergebnis durch den Vergleich einer oder mehrerer erhaltener Adressen des ausführenden Benutzers mit der in den Verweisinformationen enthaltenen Kaufadresse und/oder den Vergleich einer oder mehrerer erhaltener Adressen des ausführenden Benutzers mit einer oder mehreren extrahierten Adressen und/oder den Vergleich zwischen erhaltenen Adressen, wenn mehrere erhaltene Adressen verfügbar sind, zu erzeugen.

14. Das Computerprogrammprodukt nach Anspruch 1, Anspruch 12 oder Anspruch 13, wobei nicht nur die Adresse, sondern auch der Zeitstempel zum Vergleich herangezogen werden kann.

15. Computerprogrammprodukt nach Anspruch 1, wobei die Gültigkeit der Kaufaktivität und/oder die Überprüfung der Kaufaktion durch einen ausführenden Benutzer auf der Grundlage des ersten, des zweiten und/oder des dritten Vergleichsergebnisses durchgeführt wird.

16. Computerprogrammprodukt nach Anspruch 1, wobei eine Gebührenerhebung für den Geschäftsinhaber, eine Belohnung für den Benutzer, der die Empfehlung ausgesprochen hat, und eine Servicegebühr, die an den ausführenden Benutzer zu zahlen ist, von dem System und/oder der Plattform auf der Grundlage der Ergebnisse der verifizierten Kaufaktivität und/oder Kaufaktion berechnet und bestimmt werden, wie z. B. die Anzahl der verifizierten Käufe, die von einer Empfehlungsinformation getätigt wurden, der Gesamtbetrag der verifizierten Käufe von einer Empfehlungsinformation, das Verhältnis zwischen Besuch und Kauf für ein empfohlenes Geschäft.

## Revendications

1. Produit programme d'ordinateur comprenant un support de stockage lisible par ordinateur contenant des instructions de programme lisibles par ordinateur pour amener un processeur à effectuer des étapes de vérification d'une activité d'achat mise en œuvre par un ou plusieurs utilisateurs d'un système et/ou d'une plateforme de référencement d'achat basé sur le crowdsourcing, comprenant les étapes suivantes :
obtenir des informations de recommandation d'achat (100), qui contiennent des informations sur le produit et/ou le service recommandé, de la part des utilisateurs du crowdsourcing ;
afficher les informations relatives à l'achat avec une adresse d'achat (202), qui peut être une adresse physique ou virtuelle ;
recevoir une demande de tâche de la part d'un utilisateur demandeur (204), l'utilisateur qui demande à d'autres utilisateurs d'exécuter une tâche pour lui étant l'utilisateur demandeur ;
contrôler une ou plusieurs réponses et une ou plusieurs actions de l'utilisateur demandeur (206) et d'un utilisateur exécutant (210), l'utilisateur qui réagit et exécute la tâche demandée étant l'utilisateur exécutant ;
obtenir l'adresse associée aux informations d'horodatage de l'utilisateur lorsque un ou plusieurs événements système prédéfinis et/ou actions de l'utilisateur sont déclenchés ou reçus (214), (222), (228), afin de générer une ou plusieurs adresses obtenues, l'adresse associée aux informations d'horodatage de l'utilisateur étant l'adresse physique actuelle de l'utilisateur ;
obtenir une preuve d'achat et un certificat d'achat respectivement de l'utilisateur exécutant et d'un propriétaire d'entreprise (226), le produit et/ou service acheté étant fourni par le propriétaire d'entreprise ;
comparer la preuve d'achat obtenue de l'utilisateur exécutant avec le certificat d'achat du propriétaire de l'entreprise pour produire un premier résultat de comparaison (232) ;
extraire l'adresse d'achat de la preuve d'achat fournie par l'utilisateur exécutant et/ou de la certification d'achat fournie par le propriétaire de l'entreprise, afin d'obtenir une ou plusieurs adresses d'achat extraites ;
comparer la ou les adresses d'achat extraites à l'adresse d'achat figurant dans les informations de référence d'achat (230) pour produire un deuxième résultat de comparaison (232) ;
comparer cette ou ces adresses obtenues de l'utilisateur exécutant avec l'adresse d'achat figurant dans les informations de référence d'achat et/ou comparer une ou plusieurs adresses obtenues de l'utilisateur exécutant avec une ou plusieurs adresses d'achat extraites afin de produire un troisième résultat de comparaison (232) ;
vérifier la validité de l'acte d'achat sur la base du premier résultat de comparaison, et vérifier la validité de l'acte d'achat par un utilisateur exécutant sur la base des deuxième et/ou troisième résultats de comparaison (232) ;
déterminer, sur la base des résultats de la vérification et/ou de la comparaison, une redevance à facturer au propriétaire de l'entreprise, une récompense à l'utilisateur qui a fourni les informations relatives à l'achat et une redevance de service à payer à l'utilisateur chargé de la mise en œuvre.

2. Le produit de programme informatique de la revendication 1, dans lequel les informations de recommandation d'achat (100) utilisées par le système et/ou la plateforme sont fournies par des utilisateurs de crowd sourcing, c'est-à-dire des particuliers et/ou des entreprises, et doivent contenir quatre types d'informations : des informations d'attribut (102), des informations d'adresse (104), des informations de recommandation (106) et des informations d'étiquette (108).

3. Le produit de programme informatique de la revendication 1 ou de la revendication 2, dans lequel les informations de référence d'achat (100) utilisées par le système et/ou la plateforme doivent au moins contenir les informations d'attribut (102) (telles que le nom du produit, le prix, les spécifications du produit, l'origine, la fonction, l'utilisation) avec l'adresse d'achat (104) (telle qu'une adresse GPS, une adresse civique, une adresse postale, une adresse intérieure, une adresse de réseau, une adresse IP).

4. Le produit de programme informatique de la revendication 1, dans lequel le système et/ou la plateforme fournissent une interface pour obtenir la preuve d'achat (226), par exemple un enregistrement de paiement, un reçu, une facture, de l'utilisateur exécutant et/ou la certification d'achat, par exemple un reçu, du propriétaire de l'entreprise en termes, mais sans s'y limiter : en prenant des photos, en prenant des vidéos, en téléchargeant des documents, en fournissant des informations.

5. Le produit de programme informatique de la revendication 1, dans lequel la vérification de l'activité d'achat est mise en œuvre pour produire un premier résultat de comparaison en comparant et/ou en mesurant le degré de correspondance entre la preuve d'achat fournie par l'utilisateur exécutant et la certification d'achat fournie par le propriétaire de l'entreprise.

6. Le produit de programme informatique de l'une des revendications précédentes, dans lequel les éléments à comparer et à mesurer pour la vérification de l'achat comprennent, sans s'y limiter, les éléments suivants : le nom du produit, le montant de l'achat, le numéro de la facture, la date et l'heure de l'achat, les caractéristiques de l'image, les pixels.

7. Le produit de programme informatique de la revendication 1, dans lequel la vérification de l'achat et/ou la mesure de l'adéquation sont mises en œuvre par l'équipe d'exploitation spécialisée dudit système et/ou de ladite plateforme, par des utilisateurs qui font appel à la foule, par des algorithmes et/ou des mécanismes tels que l'intelligence artificielle, ou par une combinaison des trois.

8. Le produit de programme informatique de la revendication 1, dans lequel une interface est fournie par le système et/ou la plate-forme pour surveiller et/ou recevoir une ou plusieurs réponses et une ou plusieurs actions d'un utilisateur demandeur et/ou d'un utilisateur exécutant (206), (212), (220).

9. Le produit de programme informatique de la revendication 8, dans lequel les réponses et actions de l'utilisateur comprennent la soumission d'une demande de l'utilisateur (par exemple, demande de visite, demande d'achat), le retour d'une réponse de l'utilisateur (par exemple, visite d'un magasin référencé pour un utilisateur demandeur, achat d'un produit référencé pour un utilisateur demandeur), la mise en œuvre d'une action de l'utilisateur (par exemple, visite, achat, soumission d'une preuve d'achat) à partir d'un utilisateur demandeur et/ou d'un utilisateur de mise en œuvre.

10. Le produit programme d'ordinateur de la revendication 1, de la revendication 8 ou de la revendication 9, dans lequel une adresse (physique et/ou virtuelle, par exemple l'adresse GPS, l'adresse IP) associée au processus d'obtention de l'horodatage (208), (214), (222), (228), est déclenchée par les réponses et/ou les actions de l'utilisateur lorsqu'il interagit avec le système et/ou la plate-forme pour générer l'adresse obtenue une ou plusieurs fois.

11. Le produit de programme informatique de la revendication 1 ou de la revendication 4, dans lequel l'adresse d'achat est extraite de la preuve d'achat fournie par l'utilisateur exécutant et/ou de la certification d'achat fournie par le propriétaire de l'entreprise, afin d'obtenir une ou plusieurs adresses d'achat extraites.

12. Le produit de programme informatique de la revendication 1, dans lequel la vérification de l'activité d'achat est en outre mise en œuvre pour produire un deuxième résultat de comparaison par la comparaison d'une ou de plusieurs adresses d'achat extraites avec l'adresse d'achat figurant dans les informations de référence.

13. Le produit de programme informatique de la revendication 1, dans lequel la vérification de l'activité d'achat est en outre mise en œuvre pour produire un troisième résultat de comparaison par la comparaison d'une ou de plusieurs adresses obtenues de l'utilisateur exécutant avec l'adresse d'achat figurant dans les informations de référence, et/ou la comparaison d'une ou de plusieurs adresses obtenues de l'utilisateur exécutant avec une ou plusieurs adresses extraites, et/ou la comparaison entre les adresses obtenues lorsque plusieurs adresses obtenues sont disponibles.

14. Le produit de programme informatique de la revendication 1, de la revendication 12 ou de la revendication 13, dans lequel non seulement l'adresse mais aussi l'horodatage peuvent être utilisés pour la comparaison.

15. Le produit de programme informatique de la revendication 1, dans lequel la validité de l'activité d'achat et/ou la vérification de l'action d'achat par un utilisateur exécutant est mise en œuvre sur la base du premier, du deuxième et/ou du troisième résultat de la comparaison.

16. Le produit de programme informatique de la revendication 1, dans lequel une redevance à la charge du propriétaire de l'entreprise, une récompense à l'utilisateur qui l'a recommandé et des frais de service à payer à l'utilisateur qui l'a mis en œuvre sont calculés et déterminés par le système et/ou la plateforme sur la base des résultats de l'activité d'achat vérifiée et/ou de l'action d'achat, tels que le nombre d'achats vérifiés effectués à partir d'une information de référence, le montant total des achats vérifiés à partir d'une information de référence, le rapport entre la visite et l'achat d'un magasin recommandé.
